# EUROPEAN PATENT APPLICATION

(11) **EP 2 924 279 A1**
(43) Date of publication of application: **30.09.2015**
(21) Application number: 15160365.1
(22) Date of filing: 23.03.2015
(51) Int. Cl.: F03D 7/02, F03D 1/06, B64C 21/00

(54) **ATTACHING JIG FOR AIRFLOW GENERATION DEVICE AND ATTACHING METHOD OF AIRFLOW GENERATION DEVICE**

(30) Priority: 28.03.2014 JP 2014069054
(71) Applicant: Kabushiki Kaisha Toshiba, Tokyo 105-8001 (JP)
(72) Inventor: Matsuda, Hisashi, Tokyo, Tokyo (JP); Yamazaki, Kenichi, Tokyo, Tokyo (JP); Tanaka, Motofumi, Tokyo, Tokyo (JP); Shimura, Naohiko, Tokyo, Tokyo (JP); Asayama, Masahiro, Tokyo, Tokyo (JP); Osako, Toshiki, Tokyo, Tokyo (JP)
(74) Representative: Lind, Urban Arvid Oskar

(57) **Abstract**

There is provided an attaching jig for an airflow generation device, capable of easily attaching the airflow generation device and efficiently performing an attachment work. An attaching jig in an embodiment is used when attaching an airflow generation device to an attachment object, the airflow generation device generating an airflow by voltage applied between a pair of electrodes provided in a base formed of a dielectric material. Here, as the attaching jig, a supporting jig that supports the airflow generation device is provided. The supporting jig includes: a plurality of support plates that support the airflow generation device on support surfaces thereof; and a coupling part that couples the plurality of support plates. The plurality of support plates are coupled at the coupling part so as to being foldable by rotationally moving around the coupling part as a rotation shaft.

## Description

### FIELD

Embodiments described herein relate generally to an attaching jig for an airflow generation device and an attaching method of an airflow generation device.

### BACKGROUND

A wind power generation system generates power utilizing wind power energy that is renewable energy. In the wind power generation system, a separated flow may occur on a front surface of a windmill blade to vary its power generation amount. For example, when the wind speed and the wind direction suddenly fluctuate, a speed triangle around the windmill blade greatly deviates from a rating point, so that the separated flow occurs in a wide range. It is not easy to sufficiently respond to sudden fluctuations in wind speed and wind direction by adjustment of a yaw angle or a pitch angle. Accordingly, in the wind power generation system, there may be cases where it is difficult to keep the power generation output stable and it is not easy to increase efficiency.

As a measure for this, it has been proposed to dispose an airflow generation device on the front surface of the windmill blade. In the airflow generation device, a pair of electrodes are provided in a base formed of a dielectric material, and voltage is applied between the pair of electrodes to generate airflow, thereby making it possible to suppress occurrence of the separated flow. As for the airflow generation device, to prevent the airflow generation device from breaking due to bowing of the windmill blade when the airflow generation device is disposed on the windmill blade of a large-scale wind power generation system (for example, a MW class) for business, it is proposed to form the base using a material flexible and excellent in weather resistance.

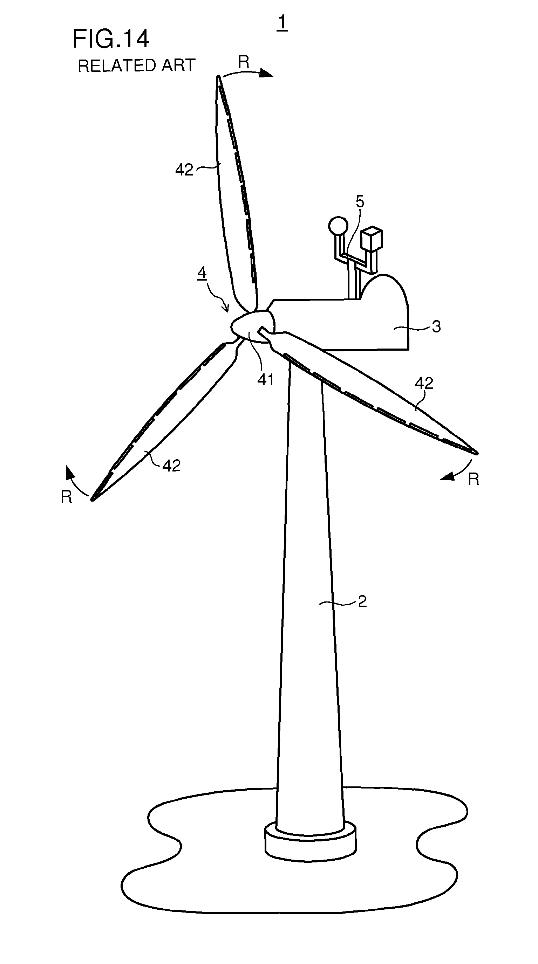

Fig. 14 is a perspective view schematically illustrating the whole configuration of a wind power generation system on which an airflow generation device is installed.

A wind-power generation system 1 is, for example, an up-wind type propeller windmill, and includes a tower 2, a nacelle 3, a rotor 4, and an aerovane unit 5 as illustrated in Fig. 14.

The tower 2 of the wind-power generation system 1 extends along a vertical direction, and a lower end portion is fixed to a base (not-illustrated) embedded underground.

The nacelle 3 of the wind power generation system 1 is provided at an upper end portion of the tower 2. The nacelle 3 is supported to be rotatable regarding the vertical direction as an axis at the upper end portion of the tower 2 in order to adjust a yaw angle.

The rotor 4 of the wind power generation system 1 is supported to be rotatable at one side end portion of the nacelle 3, and rotates in a rotation direction R regarding the horizontal direction as a rotation axis. The rotor 4 includes a hub 41 and a plurality of windmill blades 42 (blades).

The hub 41 of the rotor 4 includes a tip cover whose outer shape is a semiellipsoidal shape, and is formed to have an outside diameter of an outer peripheral surface gradually increasing from a windward side to a leeward side. The plurality of windmill blades 42 of the rotor 4 are provided at intervals in the rotational direction R around the hub 41. For example, three windmill blades 42 are provided and each have one end supported to be rotatable on the hub 41 in order to adjust a pitch angle.

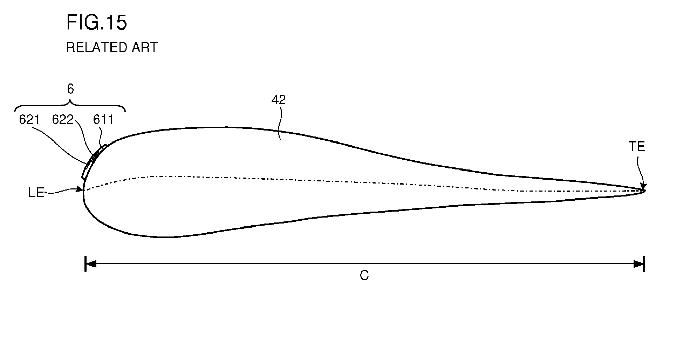

Fig. 15 is a view illustrating one windmill blade 42 in the wind power generation system. Fig. 15 illustrates a cross-section along a blade thickness direction of the windmill blade 42.

As illustrated in Fig. 15, an airflow generation device 6 is installed on the windmill blade 42. Further, as illustrated in Fig. 14, a plurality of airflow generation devices 6 are installed side by side in a blade span direction on each of the windmill blades 42. Details of the airflow generation device 6 will be described later.

The aerovane unit 5 of the wind power generation system 1 is attached, as illustrated in Fig. 14, to an upper surface of the nacelle 3 at the leeward of the windmill blade 42. Data obtained by the aerovane unit 5 through measurement of the wind speed and the wind direction is outputted to a control unit (not illustrated). According to the measured data, the control unit adjusts the yaw angle and the pitch angle. According to the measured data, the control unit further controls the operation of the airflow generation device 6.

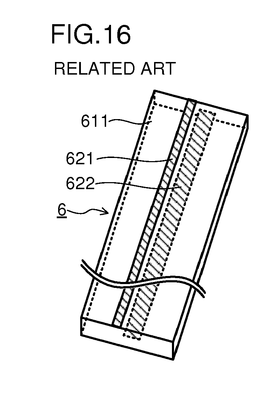

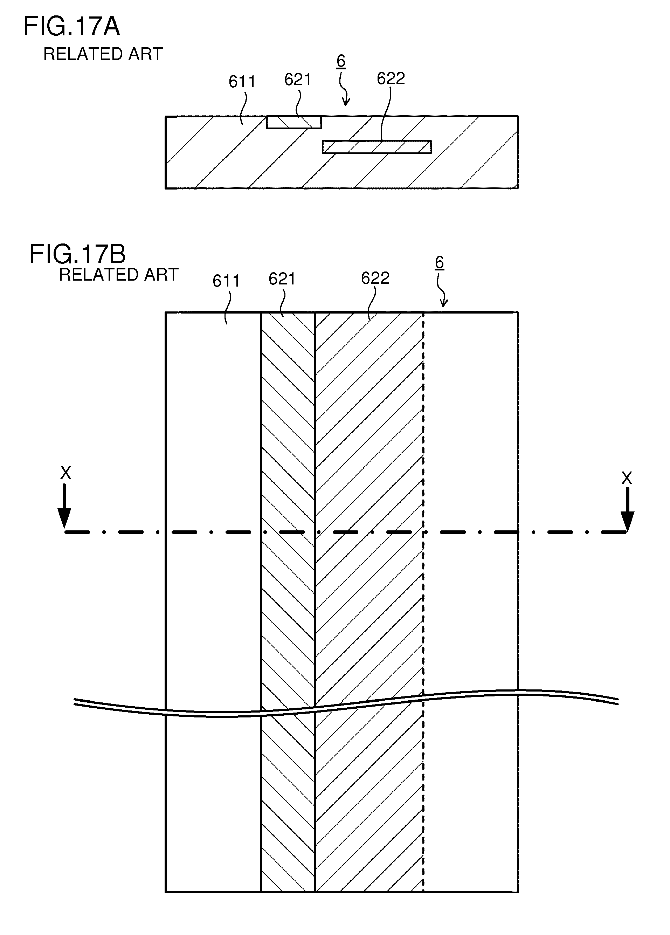

Fig. 16, Fig. 17A, Fig. 17B are views schematically illustrating the airflow generation device 6 in the wind power generation system. Fig. 16 is a perspective view. Fig. 17A is a cross-sectional view, and Fig. 17B is a top view. Fig. 17A corresponds to a cross-section of an X-X part in Fig. 17B. Fig. 16 and Fig. 17A, Fig. 17B illustrate a state before the airflow generation device 6 is installed on the windmill blade 42 (see Fig. 15).

As illustrated in Fig. 16, Fig. 17A, Fig. 17B, the airflow generation device 6 includes a base 611, a first electrode 621 (surface electrode) and a second electrode 622 (internal electrode). The airflow generation device 6 is made by providing the first electrode 621 and the second electrode 622 in the base 611, and has a thickness of, for example, several millimeters. The airflow generation device 6 is formed, for example, by various types of processing such as presswork and extrusion-forming work.

The base 611 of the airflow generation device 6 is formed of a dielectric material (insulator).

For example, the body 611 is formed using a resin such as a polyimide resin, a silicone resin (silicone rubber), an epoxy resin, a fluorine resin, or the like, and is flexible. Besides them, the base 611 may be, for example, formed by layering a plurality of prepreg sheets obtained by impregnating mica paper with an epoxy resin.

Each of the first electrode 621 and the second electrode 622 of the airflow generation device 6 is formed of, for example, a conductive material such as a metal material.

The first electrode 621 is a linearly extending plate-shaped body and provided on a surface (upper surface) of the body 611. Concretely, the first electrode 621 has an upper surface exposed and surfaces (lower surface, side surface) other than the upper surface arranged in contact with the body 611.

The second electrode 622 is, similarly to the first electrode 621, a linearly extending plate-shaped body. The second electrode 622 is provided inside the base 611, unlike the first electrode 621. Concretely, the second electrode 622 has an upper surface, a lower surface, and a side surface in contact with the base 611, and is arranged at a position deeper than that of the first electrode 621. Further, the second electrode 622 linearly extends in the same direction as the extending direction (first direction, longitudinal direction) in which the first electrode 621 extends. Here, the second electrode 622 is arranged side by side with the first electrode 621 in a direction (second direction) perpendicular to the extending direction (first direction) of the first electrode 621.

As illustrated in Fig. 15, the airflow generation device 6 is provided on the surface of the windmill blade 42. The airflow generation device 6 is bonded to the windmill blade 42 such that the surface (lower surface) opposite to the front surface (upper surface) on which the first electrode 621 (see Fig. 17) closely adheres to the surface on the blade back side of the windmill blade 42. Further, the airflow generation device 6 has the first electrode 621 and the second electrode 622 which are installed on a portion on a side of a leading edge LE of the surface (upper surface) on the blade back side of the windmill blade 42. The first electrode 621 and the second electrode 622 are installed side by side in order from the leading edge LE to a trailing edge TE.

Besides, as illustrated in Fig. 14, the plurality of airflow generation devices 6 are arranged side by side in a blade span (blade width) direction on each of the plurality of windmill blades 42. Here, the plurality of airflow generation devices 6 are installed at intervals, and the extending direction (first direction) of the first electrode 621 and the second electrode 622 is along the blade span (blade width) direction.

Though not illustrated, each of the first electrode 621 and the second electrode 622 of the airflow generation device 6 is electrically connected to a voltage application unit (not illustrated) via a connecting wire (not illustrated). The voltage application unit applies voltage between the first electrode 621 and the second electrode 622 according to a control signal outputted from a control unit (not illustrated) to generate a plasma airflow on the front surface (upper surface) of the airflow generation device 6 by dielectric barrier discharge. This suppresses generation of a separated flow.

It is difficult to attach the above-described airflow generation device to an attachment object such as a windmill blade and it is not easy to efficiently perform the attachment work in some cases.

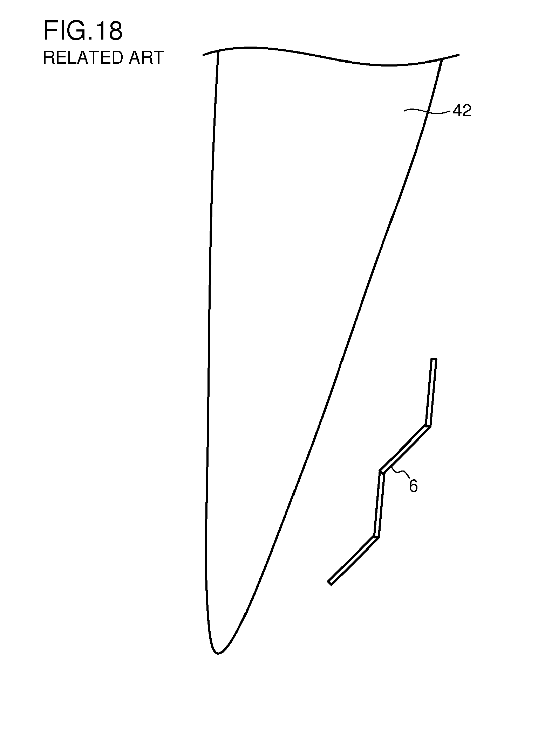

Fig. 18 is a view schematically illustrating the appearance when the airflow generation device 6 is attached to the windmill blade 42.

As illustrated in Fig. 18, at the time when the airflow generation device 6 is attached to the windmill blade 42, the airflow generation device 6 may be driven by the wind and bow. For this reason, attachment is not easy and efficient attachment work is difficult in some cases, and the electrodes of the airflow generation device 6 may break. In particular, at the time when a long flexible airflow generation device 6 (for example, a length of several meters) is attached to the windmill blade 42 without detaching the windmill blade 42 in a large-scale wind power generation system which has been already installed for business, the work is performed at high altitude outdoors, resulting in decreased efficiency of the attachment work.

As a result, reduction in cost of the attachment work is not easy in some cases. Accompanying this, it may be difficult to realize an increase in efficiency of the wind power generation system at a low cost.

Therefore, a problem to be solved by the present invention is to provide an attaching jig for an airflow generation device, capable of easily attaching an airflow generation device and efficiently performing an attachment work, and an attaching method of the airflow generation device.

### BRIEF DESCRIPTION OF THE DRAWINGS

Fig. 1A, Fig. 1B are views schematically illustrating an attaching jig for an airflow generation device in a first embodiment according to the present invention.
Fig. 2 is a view schematically illustrating the appearance of an attachment work of attaching the airflow generation device to a windmill blade using the attaching jig in the first embodiment according to the present invention.
Fig. 3A, Fig. 3B are views schematically illustrating the appearance of an attachment work of attaching the airflow generation device to the windmill blade using the attaching jig in the first embodiment according to the present invention.
Fig. 4A, Fig. 4B are views schematically illustrating an attaching jig for an airflow generation device in a second embodiment according to the present invention.
Fig. 5A, Fig. 5B are views schematically illustrating an attaching jig for an airflow generation device in a third embodiment according to the present invention.
Fig. 6 is a view schematically illustrating the appearance of the attachment work of attaching the airflow generation device to the windmill blade using the attaching jig in the third embodiment according to the present invention.
Fig. 7A, Fig. 7B are views schematically illustrating an attaching jig for an airflow generation device in a fourth embodiment according to the present invention.
Fig. 8 is a view schematically illustrating the appearance of the attachment work of attaching the airflow generation device to the windmill blade using the attaching jig in the fourth embodiment according to the present invention.
Fig. 9A, Fig. 9B are views schematically illustrating the appearance of the attachment work of attaching the airflow generation device to the windmill blade using the attaching jig in the fourth embodiment according to the present invention.
Fig. 10 is a view schematically illustrating an attaching jig for an airflow generation device in a fifth embodiment according to the present invention.
Fig. 11 is a view schematically illustrating the appearance of the attachment work of attaching the airflow generation device to the windmill blade using the attaching jig in the fifth embodiment according to the present invention.
Fig. 12 is a view schematically illustrating an attaching jig for an airflow generation device in a sixth embodiment according to the present invention.
Fig. 13 is a view schematically illustrating the appearance of the attachment work of attaching the airflow generation device to the windmill blade using the attaching jig in the sixth embodiment according to the present invention.
Fig. 14 is a perspective view schematically illustrating the whole configuration of a wind power generation system on which the airflow generation device is installed.
Fig. 15 is a view illustrating one windmill blade in the wind power generation system.
Fig. 16 is a view schematically illustrating the airflow generation device in the wind power generation system.
Fig. 17A, Fig. 17B are views schematically illustrating the airflow generation device in the wind power generation system.
Fig. 18 is a view schematically illustrating the appearance when the airflow generation device is attached to the windmill blade.

### DETAILED DESCRIPTION

An attaching jig in an embodiment is used when attaching an airflow generation device to an attachment object, the airflow generation device generating an airflow by voltage applied between a pair of electrodes provided in a base formed of a dielectric material. Here, as the attaching jig, a supporting jig that supports the airflow generation device is provided. The supporting jig includes: a plurality of support plates for supporting the airflow generation device on support surfaces thereof; and a coupling part coupling the plurality of support plates, and is foldable by the plurality of support plates rotationally moving around the coupling part as a rotation shaft.

Embodiments will be described with reference to the drawings.

### <First Embodiment>

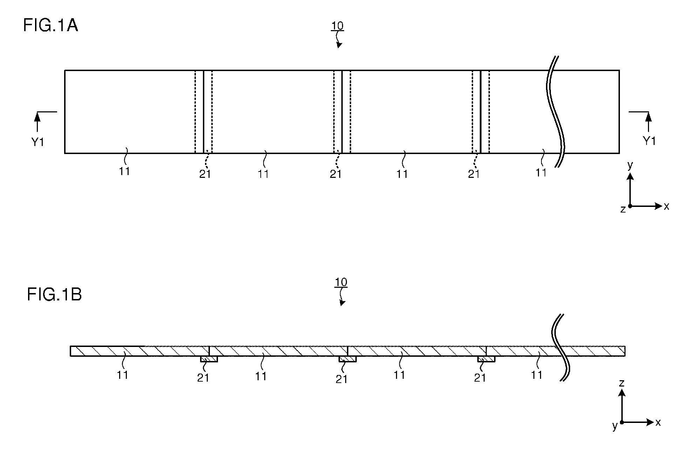

Fig. 1A, Fig. 1B are views schematically illustrating an attaching jig for an airflow generation device in a first embodiment according to the present invention. Here, Fig. 1A is a top view. Fig. 1B is a sectional side view and illustrates a Y1-Y1 part in Fig. 1A. Note that dimensions and so on are appropriately changed in the drawings for reasons of illustration.

The attaching jig is used when attaching a flexible airflow generation device 6 in a thin band shape (see Fig. 16 and so on) to an attachment object such as a windmill blade 42 (see Fig. 14 and so on), and includes a supporting jig 10 that supports the airflow generation device 6 as illustrated in Fig. 1A, Fig. 1B in this embodiment.

The supporting jig 10 has a plurality of support plates 11 that support the airflow generation device 6 on their support surfaces, and coupling parts 21 that couple the plurality of support plates 11. In this embodiment, the supporting jig 10 is configured to be foldable by the plurality of support plates 11 rotationally moving around the coupling parts 21 as rotation shafts.

Concretely, the plurality of support plates 11 of the supporting jig 10 are, for example, rectangular plate bodies and arranged side by side along a longitudinal direction. Each of the plurality of support plates 11 is formed of a material harder than that of the airflow generation device 6. A plate body formed using, for example, a material such as plastic, metal or the like can be used as the support plate 11.

The coupling part 21 of the supporting jig 10 is provided between a pair of support plates 11 adjacent to each other of the plurality of support plates 11. The coupling parts 21 each couple a pair of support plates 11 so that the plurality of support plates 11 rotationally move around the coupling parts 21 as rotation shafts to fold the supporting jig 10. In this embodiment, the coupling part 21 is configured using, for example, an adhesive tape more flexible than the support plate 11, as a coupling member. Here, the adhesive tape is pasted to surfaces opposite to the support surfaces supporting the airflow generation device 6 of the plurality of support plates 11 and thereby constitutes the coupling part 21, and the adhesive tape is bent when folding the supporting jig 10.

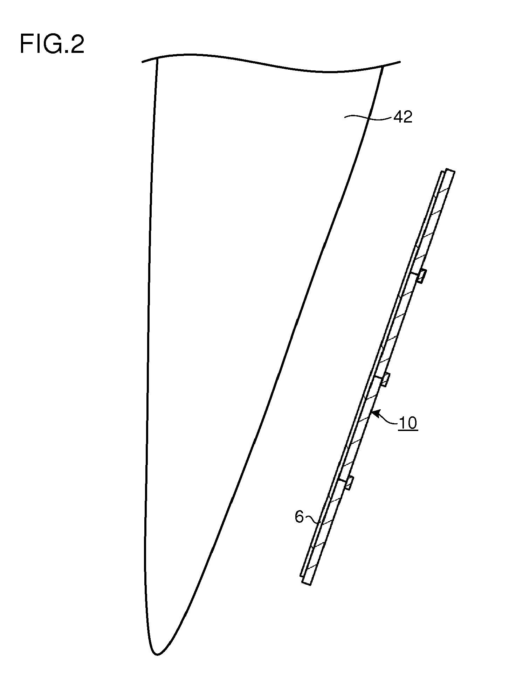

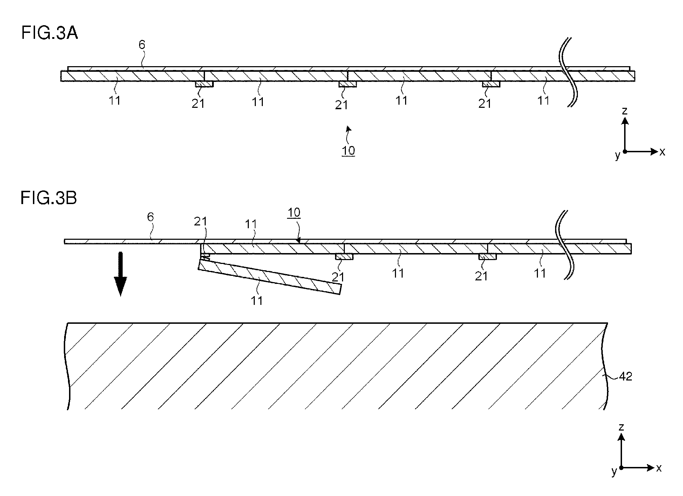

Fig. 2, Fig. 3A, Fig. 3B are views schematically illustrating the appearance of an attachment work of attaching the airflow generation device to the windmill blade using the attaching jig in the first embodiment according to the present invention. Fig. 2 illustrates the whole appearance of the attachment work. In contrast to this, Fig. 3A and Fig. 3B illustrate, similarly to Fig. 1B, a cross-section with a part of the appearance of the attachment work enlarged.

As illustrated in Fig. 2, the airflow generation device 6 is attached to the windmill blade 42 by performing the attachment work using the supporting jig 10 in this embodiment.

At the time when performing the above attachment work, first of all, the supporting jig 10 supports the airflow generation device 6 as illustrated in Fig. 3A (support step).

Here, the plurality of support plates 11 of the supporting jig 10 support the airflow generation device 6 on their support surfaces. Concretely, a rear surface (lower surface) (see Fig. 17A) located opposite to a front surface (upper surface) where a first electrode 621 is provided of the airflow generation device 6 is arranged to face the support surfaces of the plurality of support plates 11. Then, for example, the adhesive tape is used to fix the airflow generation device 6 to the support surfaces of the plurality of support plates 11.

Next, as illustrated in Fig. 3B, the airflow generation device 6 is detached from the supporting jig 10 and attached to the windmill blade 42 (attachment step).

Here, an attachment work of detaching a part of the airflow generation device 6 from some support plates 11 of the plurality of support plates 11 supporting the airflow generation device 6, and attaching the detached part of the airflow generation device 6 to the windmill blade 42. Concretely, a part of the airflow generation device 6 is detached from the supporting jig 10 to expose a part of the rear surface of the airflow generation device 6. Then, some support plates 11 of the plurality of support plates 11 constituting the supporting jig 10 are rotationally moved around the coupling parts 21 to fold a part of the supporting jig 10. Thereafter, the exposed part of the rear surface of the airflow generation device 6 is bonded to the windmill blade 42.

Then, such attachment work is repeatedly performed to attach the whole of the airflow generation device 6 to the windmill blade 42 (see Fig. 14 and so on).

As described above, the airflow generation device 6 is attached to the windmill blade 42 using the supporting jig 10 in this embodiment. This makes it possible to perform the attachment work with the shape of the flexible airflow generation device 6 held in a fixed state by the supporting jig 10. It is also possible to fold the supporting jig 10 and thereby attach a part of the airflow generation device 6 in a length (for example, a length of 30 cm to 50 cm) with which the attachment work is easy.

Accordingly, in this embodiment, it is possible to prevent the airflow generation device 6 from being driven by the wind and bowing at the time when the airflow generation device 6 is attached to the windmill blade 42 so as to facilitate attachment and enable efficient attachment work. In particular, even in the case of performing the attachment work at high altitude outdoors such as a case of attaching a long flexible airflow generation device 6 (for example, a length of several meters) to the windmill blade 42 without detaching the windmill blade 42 in a large-scale wind power generation system which has been already installed for business, the efficiency of the attachment work can be improved in this embodiment.

As a result, the cost of the attachment work can be reduced in this embodiment. Further, it is possible to prevent bowing of the airflow generation device 6 and therefore to suppress breakage of the airflow generation device 6. Furthermore, an increased efficiency of the wind power generation system can be achieved at a low cost.

Note that the case where the airflow generation device 6 is attached to the windmill blade 42 has been described in this embodiment, but the above-described attaching jig is not limited to this. The attaching jig may be used when attaching the airflow generation device 6 to an attachment object such as a moving body or a fluid machinery other than the windmill blade 42.

### <Second Embodiment>

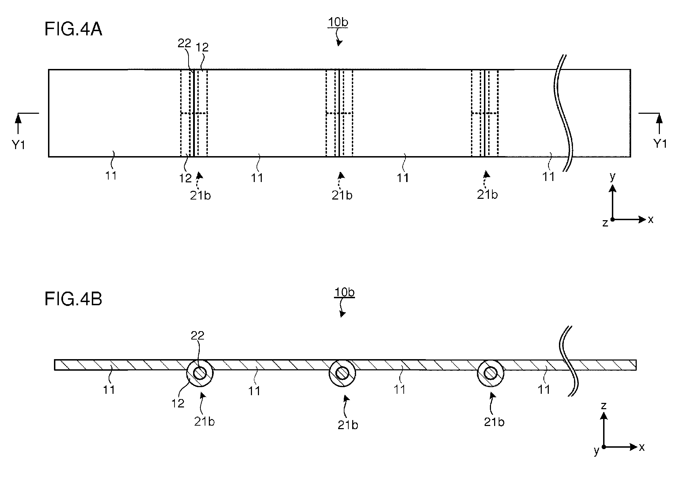

Fig. 4A, Fig. 4B are views schematically illustrating an attaching jig for an airflow generation device in a second embodiment according to the present invention. Here, Fig. 4A is, similarly to Fig. 1A, a top view. Fig. 4B is, similarly to Fig. 4B, a sectional side view and illustrates a Y1-Y1 part in Fig. 4A.

This embodiment is different, as illustrated in Fig. 4A, Fig 4B, from the case of the first embodiment in a part of a supporting jig 10b (see Fig. 1A, Fig. 1B and so on). This embodiment is the same as the case of the above-described embodiment except the above point and related points. Therefore, description of overlapping portions in this embodiment will be appropriately omitted.

In this embodiment, as illustrated in Fig. 4A, Fig. 4B, the supporting jig 10b has coupling parts 21b in a hinge structure, unlike that in the first embodiment. The coupling part 21b is provided with a bearing part 12 and a shaft 22.

The bearing part 12 is tubular and formed at the support plate 11. The bearing part 12 is formed to project in a convex shape on the side opposite to the side of the support surface supporting the airflow generation device of the support plate 11. Further, the bearing part 12 is located between a pair of support plates 11 adjacent to each other of the plurality of support plates 11. The bearing part 12 provided at one of the pair of support plates 11 adjacent to each other and the bearing part 12 provided at the other of the pair of support plates 11 are arranged coaxially to each other.

The shaft 22 is inserted to pass through both the inside of the bearing part 12 provided at the one support plate 11 and the inside of the bearing part 12 provided at the other support plate 11. The shaft 22 supports the pair of support plates 11 adjacent to each other such that they freely rotate.

In this embodiment, it is possible to attach the airflow generation device 6 to the windmill blade 42 using the supporting jig 10b in the same procedure as that in the above embodiment (see Fig. 2, Fig. 3A, Fig. 3B and so on).

Accordingly, the cost of the attachment work can be reduced in this embodiment as in the above embodiment. Further, it is possible to prevent bowing of the airflow generation device 6 and therefore to suppress breakage of the airflow generation device 6. Furthermore, an increased efficiency of the wind power generation system can be achieved at a low cost.

Note that the case where the support plate 11 is provided with the bearing part 12 and the shaft 22 is inserted into the bearing part 12 has been described in this embodiment, but the support plate 11 is not limited to this. The support plate 11 may be coupled to another hinge used as a coupling member.

### <Third Embodiment>

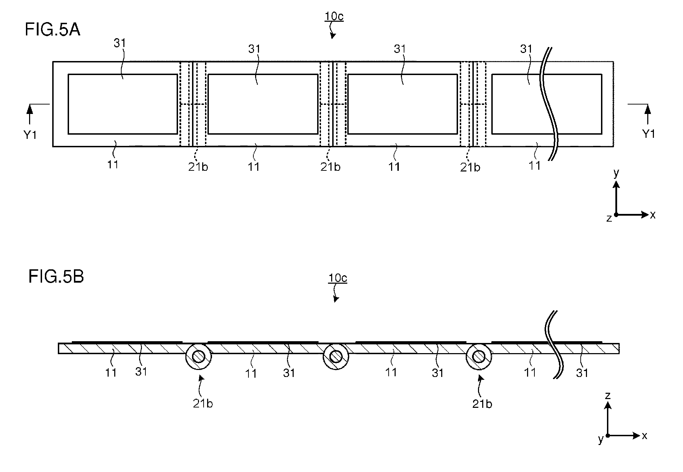

Fig. 5A, Fig. 5B are views schematically illustrating an attaching jig for an airflow generation device in a third embodiment according to the present invention. Here, Fig. 5A is, similarly to Fig. 4A, a top view. Further, Fig. 5B is, similarly to Fig. 4B, a sectional side view and illustrates a Y1-Y1 part in Fig. 5A.

This embodiment is different, as illustrated in Fig. 5A, Fig. 5B, from the second embodiment in a part of a supporting jig 10c (see Fig. 4A, Fig. 4B and so on). This embodiment is the same as the above-described embodiment except the above point and related points. Therefore, description of overlapping portions in this embodiment will be appropriately omitted.

In this embodiment, as illustrated in Fig. 5A, Fig. 5B, a plurality of support plates 11 of the supporting jig 10c each have an adhesive layer 31 formed on the support surface. The adhesive layer 31 is formed, for example, to have an adhesive strength with which the airflow generation device 6 can be supported and easily detached at the attachment work.

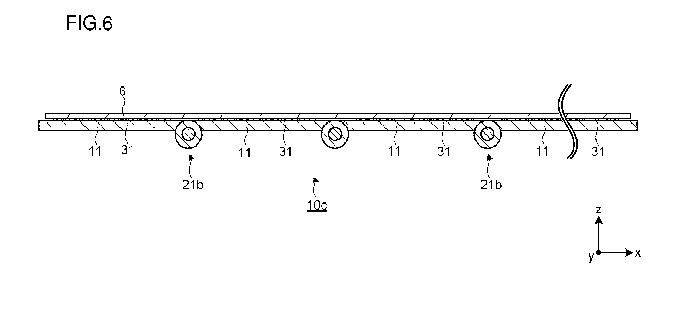

Fig. 6 is a view schematically illustrating the appearance of an attachment work of attaching the airflow generation device to the windmill blade using the attaching jig in the third embodiment according to the present invention. Fig. 6 illustrates, similarly to Fig. 5B, a cross-section with a part of the appearance of the attachment work enlarged.

In this embodiment, first of all, as illustrated in Fig. 6, the supporting jig 10c supports the airflow generation device 6 by the adhesive layers 31 (support step). More specifically, the airflow generation device 6 is pasted and fixed to the supporting jig 10c using the adhesive layers 31.

Next, as in the case of the above embodiment, the airflow generation device 6 is detached from the supporting jig 10c and attached to the windmill blade 42 (attachment step).

Accordingly, in this embodiment, the cost of the attachment work can be reduced as in the above embodiment. Further, it is possible to prevent bowing of the airflow generation device 6 and therefore to suppress breakage of the airflow generation device 6. Furthermore, an increased efficiency of the wind power generation system can be achieved at a low cost.

### <Fourth Embodiment>

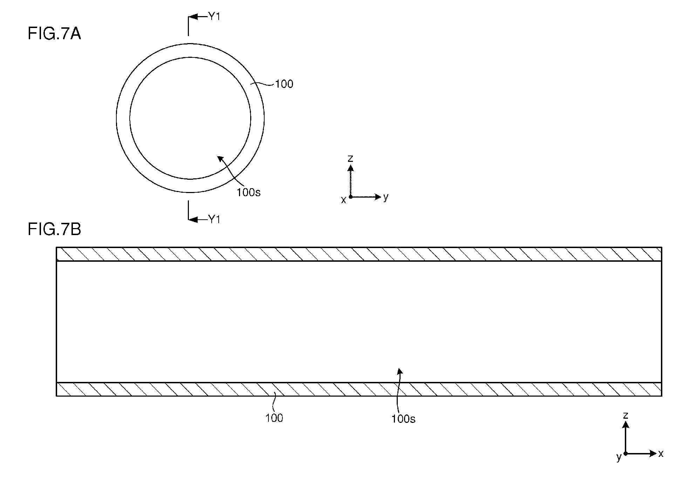

Fig. 7A, Fig. 7B are views schematically illustrating an attaching jig for an airflow generation device in a fourth embodiment according to the present invention. Here, Fig. 7A is a front view. Fig. 7B is a cross-sectional view and illustrates a Y1-Y1 part in Fig. 7A.

This embodiment is different, as illustrated in Fig. 7A, Fig. 7B, from the first embodiment in that a housing container 100 is further provided (see Fig. 1A, Fig. 1B and so on). This embodiment is the same as the above-described embodiment except the above point and related points. Therefore, description of overlapping portions in this embodiment will be appropriately omitted.

As illustrated in Fig. 7A, Fig. 7B, the housing container 100 is configured to house a supporting jig 10 (see Fig. 2, Fig. 3A, Fig. 3B and so on) to which the airflow generation device 6 is fixed, in an internal space 100s. The housing container 100 is a plastic pipe that is a circular cylindrical body and formed of a plastic material such as polyvinyl chloride.

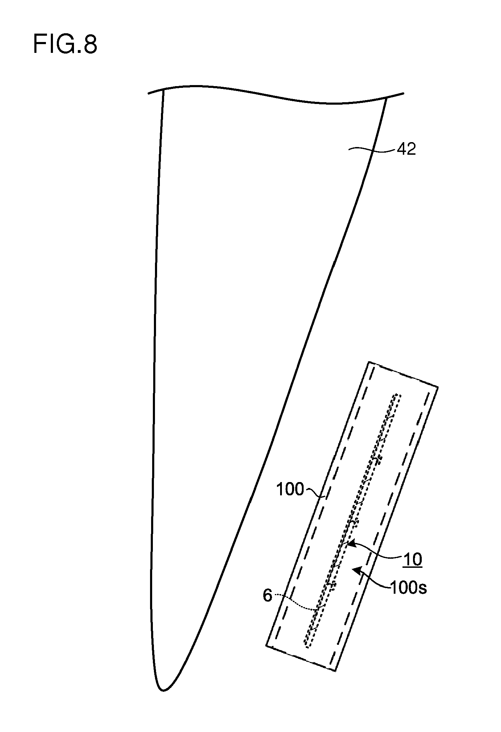

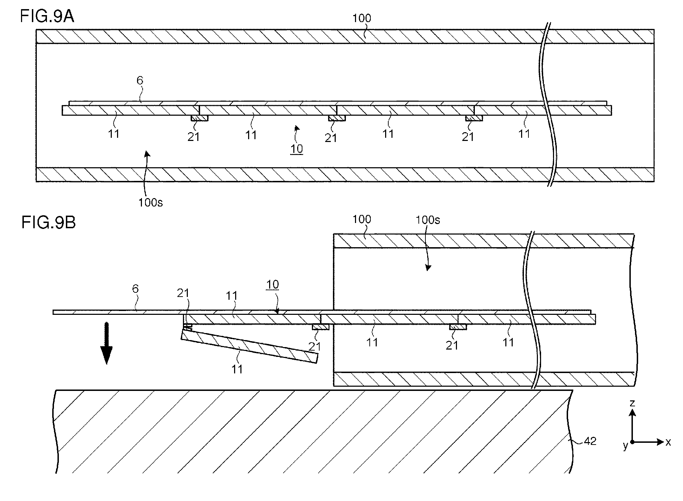

Fig. 8, Fig. 9A, Fig.9B are views schematically illustrating the appearance of an attachment work of attaching the airflow generation device to the windmill blade using the attaching jig in the fourth embodiment according to the present invention. Fig. 8 illustrates, similarly to Fig. 2, the whole appearance of the attachment work. In contrast to this, Fig. 9A and Fig. 9B illustrate, similarly to Fig. 7B, a cross-section with a part of the appearance of the attachment work enlarged.

As illustrated in Fig. 8, the airflow generation device 6 is attached to the windmill blade 42 using the supporting jig 10 and the housing container 100 in this embodiment.

In this embodiment, at the time when the airflow generation device 6 is attached to the windmill blade 42, first of all, the supporting jig 10 supports the airflow generation device 6 as in the above embodiment (support step) (see Fig. 3A and so on).

Next, as illustrated in Fig. 9A, the supporting jig 10 supporting the airflow generation device 6 is housed in the internal space 100s of the housing container 100 in this embodiment, unlike the above embodiment (housing step).

Next, as illustrated in Fig. 9B, the airflow generation device 6 is detached from the supporting jig 10 and attached to the windmill blade 42 (attachment step).

Here, some support plates 11 of the plurality of support plates 11 supporting the airflow generation device 6 in the internal space 100s of the housing container 100 are taken out of the internal space 100s of the housing container 100 to the outside. Then, a part of the airflow generation device 6 is detached from the taken-out some support plates 11. Thereafter, the detached part of the airflow generation device 6 is attached to the windmill blade 42.

Then, such attachment work is repeatedly performed to attach the whole of the airflow generation device 6 to the windmill blade 42.

Accordingly, in this embodiment, it is possible to further effectively prevent the airflow generation device 6 from being driven by the wind and bowing at the time when the airflow generation device 6 is attached to the windmill blade 42. This further facilitates attachment and enables more efficient attachment work in this embodiment. In particular, even in the case of performing the attachment work at high altitude outdoors such as a case of attaching a long flexible airflow generation device 6 (for example, a length of several meters) to the windmill blade 42 without detaching the windmill blade 42 in a large-scale wind power generation system which has been already installed for business, the efficiency of the attachment work can be improved in this embodiment.

As a result, the cost of the attachment work can be reduced in this embodiment. Further, it is possible to prevent bowing of the airflow generation device 6 and therefore to suppress breakage of the airflow generation device 6. Furthermore, an increased efficiency of the wind power generation system can be achieved at a low cost.

Note that the case where the housing container 100 is a circular cylindrical body has been described in this embodiment, but the housing container 100 is not limited to this. The housing container 100 may be a cylindrical body other than the circular cylindrical body. In addition, the housing container 100 may be a container other than the cylindrical body.

### <Fifth Embodiment>

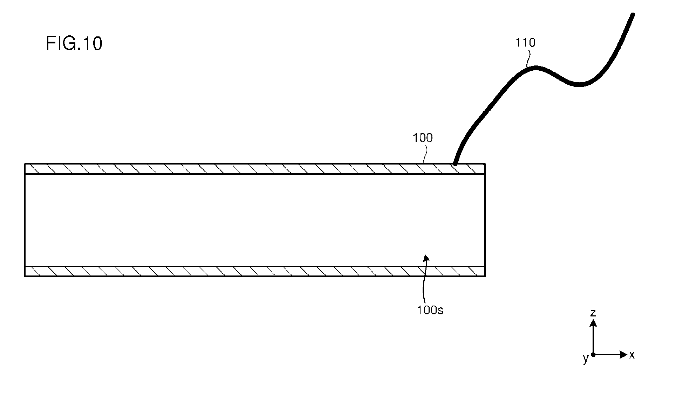

Fig. 10 is a view schematically illustrating an attaching jig for an airflow generation device in a fifth embodiment according to the present invention. Fig. 10 is, similarly to Fig. 7B, a cross-sectional view.

In this embodiment, as illustrated in Fig. 10, the housing container 100 is provided with a rope 110. This embodiment is the same as the fourth embodiment except the above point and related points. Therefore, description of overlapping portions in this embodiment will be appropriately omitted.

As illustrated in Fig. 10, the rope 110 is provided on an outer peripheral surface of the housing container 100. Here, the rope 110 is located on one side in a longitudinal direction of the housing container 100.

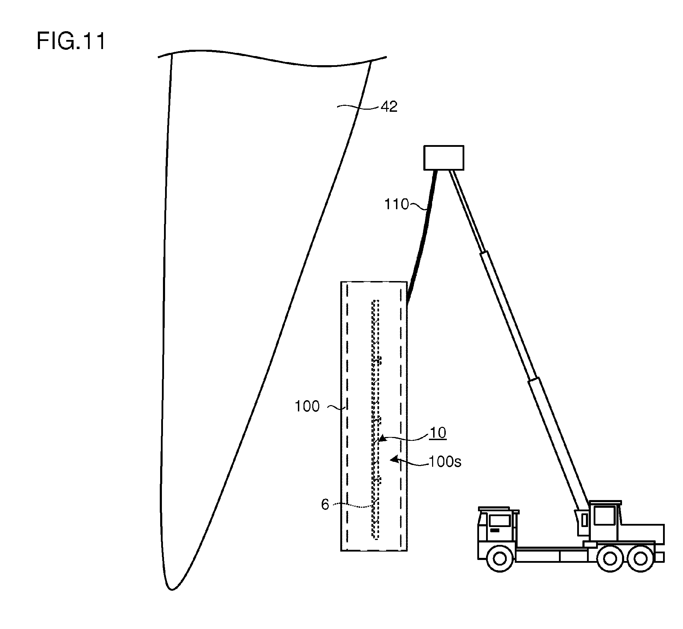

Fig. 11a view schematically illustrating the appearance of the attachment work of attaching the airflow generation device to the windmill blade using the attaching jig in the fifth embodiment according to the present invention. Fig. 11 illustrates, similarly to Fig. 8, the whole appearance of the attachment work.

As illustrated in Fig. 11, at the time when the airflow generation device 6 is attached to the windmill blade 42, the housing container 100 housing the supporting jig 10 supporting the airflow generation device 6 is towed using the rope 110. For example, by fixing the rope 110 to a winch of a crane vehicle and winding up the rope 110, the housing container 100 is moved upward. Concretely, a hub is provided at a height of 50 m or more in the case of a large-scale windmill (MW class) for business, and therefore the housing container 100 is towed to a height corresponding thereto.

Then, in the state that the housing container 100 has been moved up, the attachment work is performed as in the case of the above embodiment to thereby attach the airflow generation device 6 to the windmill blade 42.

Accordingly, in this embodiment, it is possible to more efficiently prevent the airflow generation device 6 from being driven by the wind and bowing at the time when the airflow generation device 6 is attached to the windmill blade 42. This further facilitates attachment and enables more efficient attachment work in this embodiment.

As a result, the cost of the attachment work can be reduced in this embodiment. Further, it is possible to prevent bowing of the airflow generation device 6 and therefore to suppress breakage of the airflow generation device 6. Furthermore, an increased efficiency of the wind power generation system can be achieved at a low cost.

### <Sixth Embodiment>

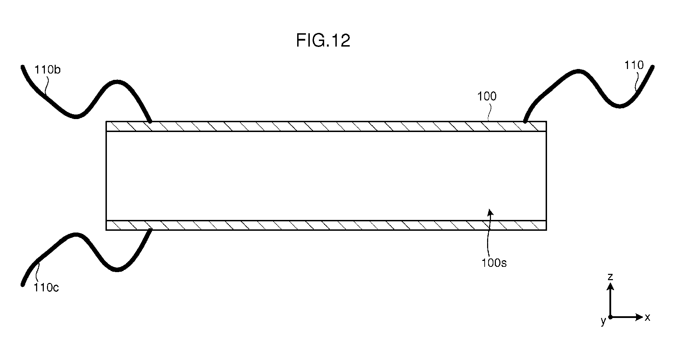

Fig. 12 is a view schematically illustrating an attaching jig for an airflow generation device in a sixth embodiment according to the present invention. Fig. 12 is, similarly to Fig. 10, a cross-sectional view.

In this embodiment, as illustrated in Fig. 12, the housing container 100 is provided with a plurality of ropes 110, 110b, 110c. This embodiment is the same as the fifth embodiment except the above point and related points. Therefore, description of overlapping portions in this embodiment will be appropriately omitted.

As illustrated in Fig. 12, the plurality of ropes 110, 110b, 110c are provided on an outer peripheral surface of the housing container 100. Here, a first rope 110 of the plurality of ropes 110, 110b, 110c is located on one side in a longitudinal direction of the housing container 100. Further, a second rope 110b and a third rope 110c are located on the other side in the longitudinal direction of the housing container 100.

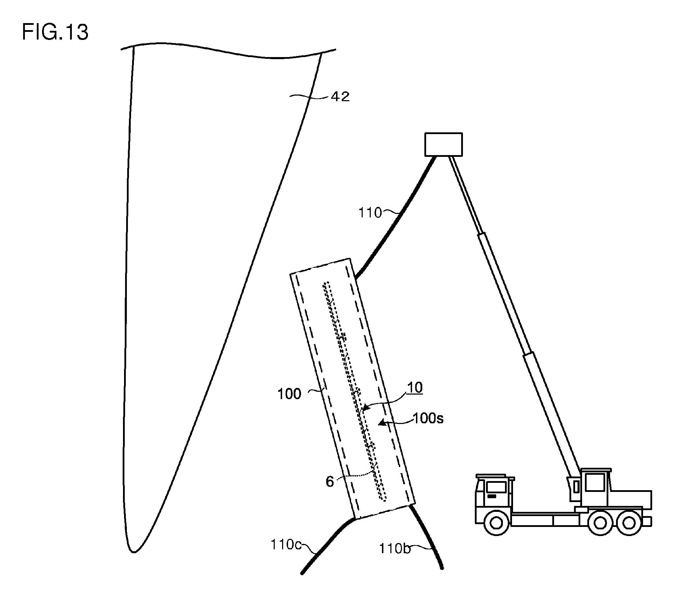

Fig. 13 a view schematically illustrating the appearance of the attachment work of attaching the airflow generation device to the windmill blade using the attaching jig in the sixth embodiment according to the present invention. Fig. 13 illustrates, similarly to Fig. 11, the whole appearance of the attachment work.

As illustrated in Fig. 13, at the time when the airflow generation device 6 is attached to the windmill blade 42, the housing container 100 housing the supporting jig 10 supporting the airflow generation device 6 is towed using the first rope 110. For example, by fixing the first rope 110 to a winch of a crane vehicle and winding up the first rope 110 as in the above embodiment, the housing container 100 is moved upward.

Then, the position of the housing container 100 is adjusted using both the second rope 110b and the third rope 110c.

Then, the attachment work is performed in the state to thereby attach the airflow generation device 6 to the windmill blade 42.

Accordingly, in this embodiment, it is possible to more efficiently prevent the airflow generation device 6 from being driven by the wind and bowing at the time when the airflow generation device 6 is attached to the windmill blade 42. This further facilitates attachment and enables more efficient attachment work in this embodiment.

As a result, the cost of the attachment work can be reduced in this embodiment. Further, it is possible to prevent bowing of the airflow generation device 6 and therefore to suppress breakage of the airflow generation device 6. Furthermore, an increased efficiency of the wind power generation system can be achieved at a low cost.

### <Others>

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An attaching jig used when attaching an airflow generation device to an attachment object, the airflow generation device generating an airflow by voltage applied between a pair of electrodes provided in a base formed of a dielectric material, the attaching jig configured to support the airflow generation device, the supporting jig comprising:
a plurality of support plates for supporting the airflow generation device on support surfaces thereof; and
a coupling part coupling the plurality of support plates,
wherein the supporting jig is foldable by the plurality of support plates rotationally moving around the coupling part as a rotation shaft.

2. The attaching jig according to claim 1, wherein the coupling part of the supporting jig has a hinge structure.

3. The attaching jig according to claim 1 or 2, wherein the plurality of support plates of the supporting jig have adhesive layers formed on the support surfaces thereof.

4. The attaching jig according to any one of claims 1 to 3, further comprising a housing container that houses, in an internal space thereof, the supporting jig to which the airflow generation device is fixed.

5. The attaching jig according to claim 4, wherein the housing container is a cylindrical body.

6. The attaching jig according to claim 4 or 5, wherein the housing container is provided with a rope.

7. The attaching jig according to claim 6, wherein the housing container is provided with a plurality of the ropes.

8. The attaching jig according to any one of claims 1 to 7, wherein the attachment object is a windmill blade.

9. An attaching method of attaching an airflow generation device to an attachment object, the airflow generation device generating an airflow by voltage applied between a pair of electrodes provided in a base formed of a dielectric material, the attaching method comprising:
a support step of a supporting jig supporting the airflow generation device; and
an attachment step of detaching the airflow generation device from the supporting jig and attaching the airflow generation device to the attachment object, wherein the supporting jig comprises: a plurality of support plates that support the airflow generation device on support surfaces thereof; and a coupling part that couples the plurality of support plates, and is foldable by the plurality of support plates rotationally moving around the coupling part as a rotation shaft,
in the support step, the plurality of support plates of the supporting jig support the airflow generation device on the support surfaces thereof, and
in the attachment step, an attachment work is repeatedly performed, the attachment work of detaching a part of the airflow generation device from some support plates of the plurality of support plates supporting the airflow generation device of the supporting jig, folding the supporting jig, and then attaching the detached part of the airflow generation device to the attachment object.

10. The attaching method according to claim 9,
wherein the plurality of support plates of the supporting jig have adhesive layers formed on the support surfaces thereof, and, in the support step, the adhesive layers support the airflow generation device on the support surfaces of the plurality of support plates.

11. The attaching method according to claim 9 or 10, further comprising a housing step of housing, in an internal space of a housing container, the supporting jig supporting the airflow generation device,
wherein, in the attachment step, an attachment work is repeatedly performed, the attachment work of taking out some support plates of the plurality of support plates supporting the airflow generation device in the internal space of the housing container from the internal space of the housing container to an outside, detaching a part of the airflow generation device from the taken-out some support plates, folding the supporting jig, and then attaching the detached part of the airflow generation device to the attachment object.

12. The attaching method according to claim 11, wherein the housing container is provided with a rope, and, in the attachment step, the housing container is towed using the rope and the attachment work is performed.

13. The attaching method according to claim 12, wherein the housing container is provided with a plurality of the ropes, and, in the attachment step, the housing container is towed using one of the plurality of ropes, and a position of the housing container is adjusted using another of the ropes to perform the attachment work.

14. The attaching method according to any one of claims 9 to 13, wherein the attachment object is a windmill blade.
